Europäisches Patentamt

European Patent Office

Office européen des brevets

(19)

(11) Veröffentlichungsnummer: **0 235 509**
**B1**

(12) # EUROPÄISCHE PATENTSCHRIFT

(45) Veröffentlichungstag der Patentschrift:
20.12.89

(51) Int. Cl.⁴: **B27B 5/29**

(21) Anmeldenummer: **87100367.9**

(22) Anmeldetag: **14.01.87**

(54) Schalteinrichtung für eine kombinierte Tisch- und Gehrungssäge.

(30) Priorität: **28.02.86 DE 3606523**

(43) Veröffentlichungstag der Anmeldung:
**09.09.87 Patentblatt 87/37**

(45) Bekanntmachung des Hinweises auf die Patenterteilung:
**20.12.89 Patentblatt 89/51**

(84) Benannte Vertragsstaaten:
**DE ES FR GB IT**

(56) Entgegenhaltungen:
**DE-A- 1 628 992**

(73) Patentinhaber: **Black & Decker Overseas AG,
Staedtle 36, FL-9490 Vaduz(LI)**

(72) Erfinder: **Bergler, Otto, Jahnstrasse 18/1,
D-7130 Mühlacker-Lomersheim(DE)**

(74) Vertreter: **Wilhelm, Hans-Herbert, Dr.-Ing. et al, Wilhelm
& Dauster Patentanwälte Hospitalstrasse 8,
D-7000 Stuttgart 1(DE)**

## Beschreibung

Die Erfindung betrifft eine Schalteinrichtung für eine kombinierte Tisch- und Gehrungssäge nach dem Oberbegriff des Patentanspruches 1.

Schalteinrichtungen dieser Art sind bekannt. Sie werden beispielsweise bei den seit vielen Jahren verkauften kombinierten Tisch- und Gehrungssägen der Anmelderin mit der Bezeichnung "TGS 172" eingesetzt. Bei diesen Bauarten ist seitlich am Traggestell der Druckschalter angebracht, der somit von der Bedienungsperson zum An- und Abschalten des Motors betätigbar ist. In der Stellung "Gehrungssägen" wird der Motor über einen in der Regel in Nähe des Handgriffes angeordneten Handschalter betätigt, der somit die Führung des Sägenaggregates bei gleichzeitig möglicher Betätigung zuläßt. Nachteilig ist in gewisser Hinsicht bei diesen Bauarten, daß in der Stellung "Gehrungssägen" zusätzlich die Betätigung des Motors durch den außen am Traggestell vorgesehenen Druckschalter möglich ist, weil beide Schalter in parallelen Stromkreisen liegen.

Der Erfindung liegt die Aufgabe zugrunde, die Schalteinrichtung aus Sicherheitsgründen so auszubilden, daß eine Doppelbetätigung des Motors in der Stellung "Gehrungssägen" nicht möglich ist.

Ausgehend von der Überlegung, daß die für die Umstellung des Aggregates auf die Stellung "Gehrungssägen" notwendige Schwenkbewegung des Arbeitstisches auch für einen Umschaltvorgang ausgenutzt werden kann, schlägt die Erfindung zur Lösung der Aufgabe die kennzeichnenden Merkmale des Patentanspruches 1 vor. Durch diese Ausgestaltung wird sichergestellt, daß der Druckschalter ausschließlich in der Stellung des Sägeaggregates zum Tischsägen, aber nicht in der Stellung zum Gehrungssägen betätigt werden kann. Der zum Einschalten des Elektromotores beim Gehrungssägen vorgesehene Handschalter liegt in der Stellung "Tischsägen" unterhalb der Arbeitsplatte und ist damit ebenfalls nicht zugänglich. Für beide Arbeitsstellungen wird durch die Erfindung daher gewährleistet, daß jeweils nur ein Schalter zugänglich ist. Die Sicherheit bei solchen Aggregaten wird dadurch erhöht.

In einfacher Weise kann die Ausgestaltung nach den Merkmalen des Anspruches 2 getroffen werden, so daß bei jeder Umstellung des Arbeitstisches auch zwangsläufig der jeweils nicht benötigte Schalter unterhalb der Arbeitstischfläche zu liegen kommt.

Die Erfindung ist in der Zeichnung anhand eines Ausführungsbeispieles dargestellt und wird im folgenden erläutert. Es zeigen:

Fig. 1 eine schematische Seitenansicht einer kombinierten Tisch- und Gehrungssäge mit der neuen Schalteinrichtung in der Stellung "Gehrungssägen",

Fig. 2 die Tisch- und Gehrungssäge der Fig. 1 in der Stellung "Tischsägen" und

Fig. 3 ein schematisches Schaltbild für die erfindungsgemäße Schalteinrichtung, die zur Steuerung der Tisch- und Gehrungssäge der Fig. 1 und 2 eingesetzt wird.

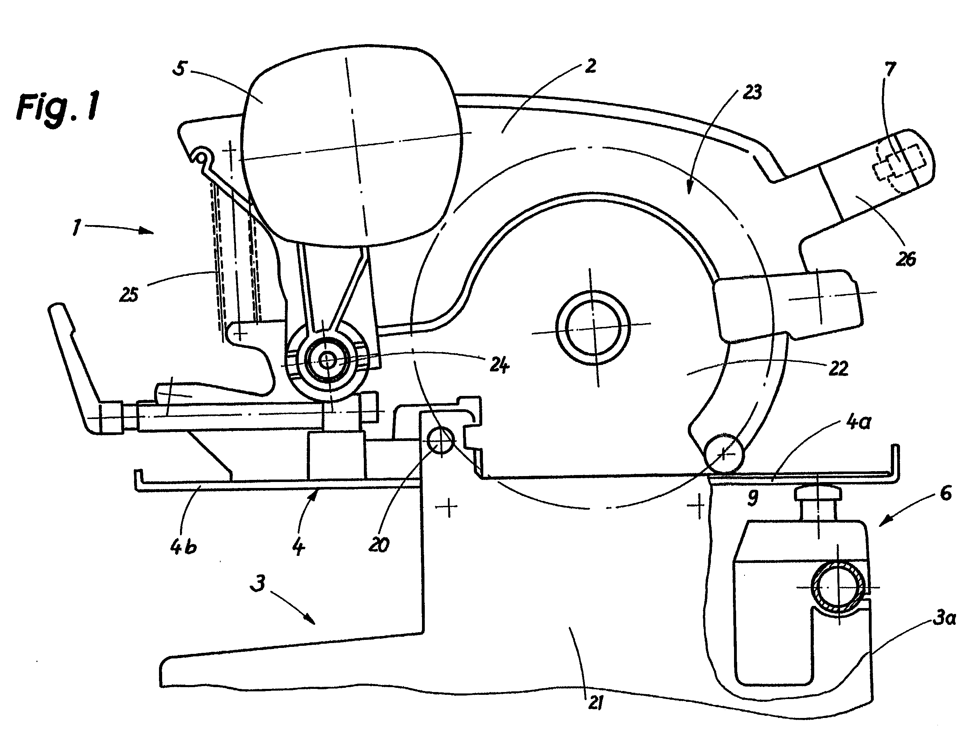

Die in der Fig. 1 gezeigte kombinierte Tisch- und Gehrungssäge (1) besteht in bekannter Weise (DE-PS 16 28 992) aus einem Sägeaggregat (2), das schwenkbar auf einer Seite eines um 180° wendbaren Arbeitstisches (4) angebracht ist, der seinerseits mit seitlichen Lagerzapfen (20) in den seitlichen Tragwänden (21) eines Traggestelles (3) gelagert ist. Das Sägeaggregat (2) besitzt ein von einem Elektromotor (5) getriebenes Sägeblatt (22), das in der üblichen Weise von einem Schutzgehäuse (23) nach oben abgedeckt ist. Das gesamte Sägeaggregat (2) ist schwenkbar um die Achse (24) am Arbeitstisch (4) angebracht. Eine Rückzugsfeder (25) sorgt dafür, daß das Sägeblatt (24) oberhalb der Arbeitstischplatte (4) steht, wenn der Handgriff (26), an dem sich auch der Handschalter (7) befindet, losgelassen wird.

Der Arbeitstisch (4) ist um seine Lagerbolzen (20) außermittig gelagert und weist einen längeren Plattenteil (4a) und einen kürzeren Plattenteil (4b) auf. Er drückt in der Stellung nach Fig. 1 mit seinem längerem Plattenteil auf die Ausschalttaste (9) eines Druckschalters (6), der an der Frontseite (3a) des Traggestelles (3) angeordnet ist. In dieser Lage kann daher der Elektromotor ausschließlich über den Handschalter (7) betätigt werden, da der Druckschalter (6) unterhalb des Tischplattenteiles (4a) liegt und für die Bedienungsperson nicht zugänglich ist.

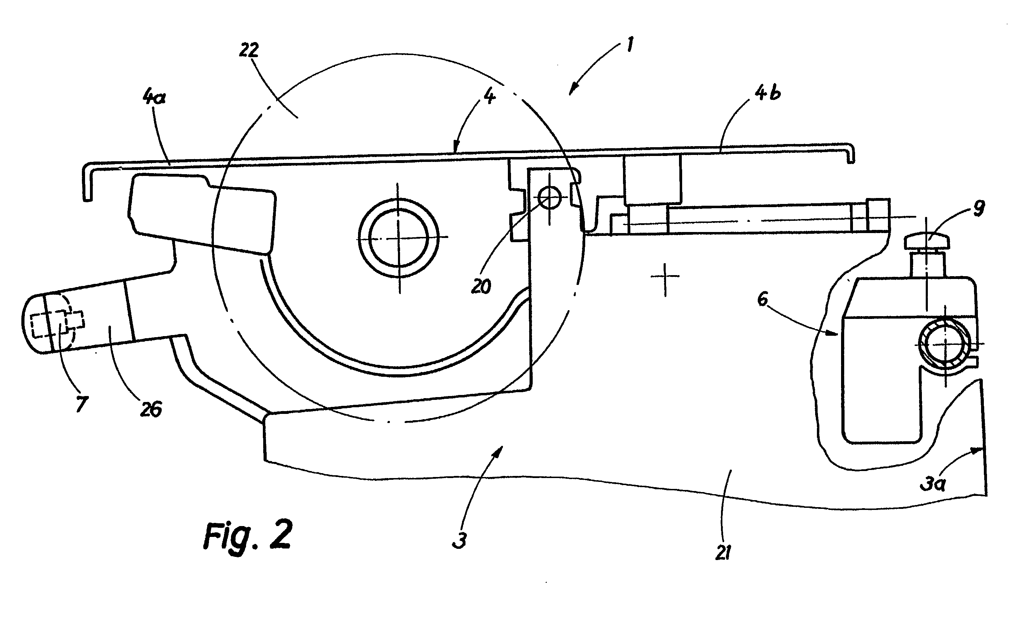

Diese Situation ändert sich, wenn der Arbeitstisch (4) aus der Stellung der Fig. 1 im Gegenuhrzeigersinn um 180° in die Stellung nach Fig. 2 verschwenkt wird, in der die Tisch- und Gehrungssäge (1) nunmehr ihre Stellung zum Tischsägen einnimmt. In dieser Stellung ist der Handschalter (7) am Handgriff (26) nicht mehr zugänglich, da er sich unterhalb der Fläche der Arbeitstischplatte (4) befindet. Zugänglich ist aber, weil der Tischplattenteil (4b) kürzer ist, der an der Frontseite (3a) angeordnete Druckschalter (6), der nunmehr die Steuerung des in der Fig. 2 nicht gezeigten, weil hinter der Tragwand (21) liegenden Elektromotors (5) übernimmt.

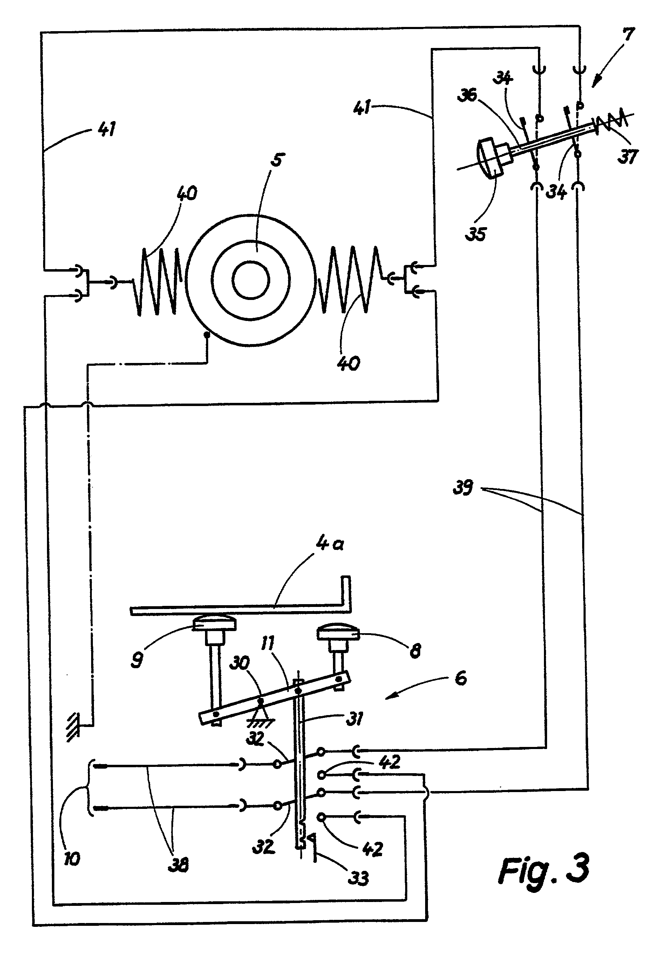

Fig. 3 zeigt die zu diesem Zweck vorgenommene Schaltung zwischen Handschalter (7) und Druckschalter (6). Die Fig. 3 zeigt dabei die Situation, die gemäß Fig. 1 dann gegeben ist, wenn der längere Tischplattenteil (4a) die Ausschalttaste (9) des Druckschalters (6) betätigt.

Aus Fig. 3 geht hervor, daß der Druckschalter (6) sowohl die Ausschalttaste (9) als auch eine Einschalttaste (8) besitzt, die beide jeweils an den Enden einer Wippe (11) angeordnet sind, die um den Schwenkpunkt (30) schwenkbar gelagert ist. An der Wippe ist außerdem eine Schaltstange (31) angelenkt, die mit den beiden Schaltelementen (32) versehen ist und in ihrer Lage jeweils durch ein federndes Rastteil (33) gesichert werden kann, die in entsprechende Ausnehmungen der Schaltstange (31) eingreift. Die beiden Schaltelemente (32) stellen die Verbindung von der Energiequelle (10), also beispielsweise dem Netzanschluß, zu den Schaltelementen (34) des Handschalters (7) her, dessen Schaltstange (36) beispielsweise über einen Schaltknopf (35) betätigbar ist. Der Handschalter (7) ist als sogenannter Totmannschalter ausgebildet. Zu diesem Zweck wird die Schaltstange (36) über eine Druckfeder (27) stets in der dargestellten Lage gehalten, in der die elektrische Verbindung zwischen den Leitungen (38) vor dem Druckschalter (6), die von der Energiequelle (10) kommen, den Leitungen (39) zwischen Druckschalter (6) und Handschalter (7) und den Leitungen (41) zu den beiden Wicklungen (40) des Elektromotors (5) unterbrochen ist. Diese Verbindung wird nur dann hergestellt, wenn die Taste (35) des Handschalters von der Bedienungsperson gedrückt wird. Nur dann läuft der Elektromotor (5). Er schaltet ab, wenn die Bedienungsperson die Taste (35) losläßt.

In der dargestellten Lage, die derjenigen nach Fig. 1 entspricht, wird die Ausschalttaste (9) des Druckschalters (6) durch den Tischplattenteil (4a) gedrückt, so daß die Schaltelemente (32) den Kontakt zwischen Energiequelle (10) und Handschalter (7) herstellen. Wird der Arbeitstisch geschwenkt und entfernt sich daher der Tischplattenteil (4a) von der Ausschalttaste (9) und von der ebenfalls unterhalb des Tisch plattenteiles (4a) liegenden Einschalttaste (8), die in den Fig. 1 und 2 jeweils hinter der Ausschalttaste (9) liegt, so wird der Druckschalter (6) zugängig und betätigbar. Der Handschalter (7) liegt in dieser Lage, wie ausgeführt, unterhalb der Arbeitstischplatte (4). Die Bedienungsperson kann nun durch Betätigen der Einschalttaste (8) die Verbindung zwischen Energiequelle (10) und den Wicklungen (40) des Elektromotors herstellen. Die Schaltelemente (32) legen sich dann an die jeweiligen unteren Kontakte (42) an. Diese Einschaltstellung wird durch die Rasteinrichtung (33) aufrechterhalten, bis die Ausschalttaste (9) gedrückt wird, so daß die Schaltstellung nach Fig. 3 wieder erreicht ist.

## Patentansprüche

1. Schalteinrichtung für eine kombinierte Tisch- und Gehrungssäge mit einem Sägeaggregat, das auf einer Seite eines um 180° schwenkbaren, in einem Traggestell gelagerten Arbeitstisches angebracht und von einem Elektromotor angetrieben ist, der in der Stellung "Tischsägen" von einem am Traggestell angebrachten Druckschalter und in der Stellung "Gehrungssägen" von einem am Sägeaggregat angebrachten Handschalter betätigbar ist, dadurch gekennzeichnet, daß der Handschalter (7) als Totmannschalter und der Druckschalter (6) als Kipp- und Wechselschalter mit einer Einschalttaste (8) und einer Ausschalttaste (9) ausgebildet sind und daß der Druckschalter (6) so an der Frontseite (3a) des Traggestelles (3) im Schwenkbereich des Arbeitstisches (4) angeordnet ist, daß er in der Stellung "Gehrungssägen" von dem längeren Tischplattenteil (4a) des außermittig gelagerten Arbeitstisches (4) überdeckt wird, wobei die Ausschalttaste (9) betätigt wird und eine Verknüpfung der Energiequelle (10) mit dem Handschalter (7) erfolgt.

2. Schalteinrichtung nach Anspruch 1, dadurch gekennzeichnet, daß der Druckschalter (6) unterhalb der Tischebene beim Gehrungssägen angeordnet ist und Einschalttaste (8) und Ausschalttaste (9) an einer Wippe (11) angebracht sind, wobei die Ausschalttaste (9) höher liegt als die Einschalttaste (8) und in den Schwenkbereich des Arbeitstisches (4) hereinragt.

## Claims

1. Switching device for a combined bench and mitre saw with a saw unit which is mounted on one side of a workbench mounted in a supporting frame and adapted to pivot through 180°, the sawing unit being driven by an electric motor which, in the "bench sawing" position, can be actuated by a push switch mounted on the supporting frame and, in the "mitre sawing" position, can be actuated by a hand switch mounted on the sawing unit, characterised in that the hand switch (7) is constructed as a dead man's switch while the push switch (6) is constructed as a rocker and pole changing switch with a switch-on button (8) and a switch-off button (9) and in that the push switch (6) is so disposed on the front (3a) of the supporting frame (3) in the pivoting zone of the workbench (4) that in the "mitre sawing" position, it is covered by the longer part (4a) of the bench top of the eccentrically mounted workbench (4), the switch-off button (9) being actuated, accompanied by a linking of the energy source (10), to the hand switch (7).

2. Switching device according to Claim 1, characterised in that the pressure switch (6) is disposed below the plane of the bench during mitre sawing and in that the switch-on button (8) and switch-off button (9) are disposed on a rocker (11), the switch-off button (9) being situated higher than the switch-on button (8) and projecting into the pivoting range of the workbench (4).

## Revendications

1. Mécanisme de couplage pour une scie de table et à onglet combinée avec un dispositif de sciage qui est fixé sur une face d'une table de travail montée sur un cadre porteur et pivotant à 180°, qui est entraînée par un moteur électrique pouvant être commandé dans la position "sciage sur table" par un manostat fixé sur le cadre porteur et dans la position "sciage en onglet" par un commutateur manuel monté sur le dispositif de sciage, caractérisé en ce que le commutateur manuel (7) est constitué par un interrupteur de l'homme mort et le manostat (6) par un commutateur à basculle et inverseur comprenant une touche de mise en circuit (8) et une touche de mise hors circuit (9) et en ce que le manostat (6) est disposé sur la face frontale (3a) du cadre porteur (3) dans la zone de pivotement de la table de travail (4), de telle sorte que dans la position "sciage en onglet" il est recouvert par la partie la plus longue (4a) de la table de travail (4) monté excentriquement, la touche de mise hors circuit (9) étant ainsi actionné et la connexion entre la source d'énergie (10) et le commutateur manuel (7) étant établie.

2. Mécanisme de couplage selon la revendication 1, caractérisé en ce que le manostat (6) est disposé en-dessous de plan de la table pour le "sciage en onglet" et en ce que la touche de mise en circuit (8) et la touche de mise hors circuit (9) sont montées sur une bascule (11), de telle sorte que la touche de mise hors circuit (9) est plus haute que la touche de mise en circuit (8) et pénètre dans la zone de pivotement de la table de travail (4).

Fig. 1

Fig. 2

EP 0 235 509 B1

Fig. 3